# EUROPÄISCHE PATENTSCHRIFT

(11) **EP 0 363 631 B1**
(45) Veröffentlichungstag und Bekanntmachung des Hinweises auf die Patenterteilung: **15.12.1993**
(21) Anmeldenummer: 89116314.9
(22) Anmeldetag: 04.09.1989
(51) Int. Cl.: H04Q 11/04

(54) **Schaltungsanordnung für Fernmeldevermittlungsanlagen, insbesondere PCM-Zeitmultiplex-Fernsprechvermittlungsanlagen mit Zentralkoppelfeld und angeschlossenen Teilkoppelfeldern**
Circuit arrangement for telecommunication exchanges, especially PCM time division telephone exchanges, with distributed switching networks connected to a central switching network
Circuit pour centraux de télécommunications, en particulier des centraux téléphoniques à division dans le temps MIC avec des réseaux de commutation distribués connectés à un réseau de commutation central

(30) Priorität: 22.09.1988 DE 3832242
(43) Veröffentlichungstag der Anmeldung: 18.04.1990
(73) Patentinhaber: SIEMENS AKTIENGESELLSCHAFT, 80333 München (DE)
(72) Erfinder: Nagler, Werner, Dipl.-Ing., D-8021 Schäflarn (DE); Hlawa, Fritz, Dipl.-Ing., D-8024 Oberhaching (DE); Schmidt, Lothar, D-8080 Fürstenfeldbruck (DE)

(56) Entgegenhaltungen:
- EP-A- 0 039 077
- EP-A- 0 291 791
- GB-A- 2 120 044
- 1976 INTERNATIONAL ZURICH SEMINAR ON DIGITAL COMMUNICATIONS, Zurich, 9. - 11. März 1976, Kapitel C1, Seiten 1-8, IEEE, New York, US; P.R. GERKE: "Interaction between circuit technology and system concepts in the field of digital TDM switching"

## Beschreibung

Die Erfindung bezieht sich auf eine Schaltungsanordnung gemäß dem Oberbegriff des Patentanspruchs 1.

Eine Anordnung der zuvor angegebenen Art ist im wesentlichen in der europäischen Patentanmeldung EP-A-0 254 855, veröffentlicht am 03.02.1988, beschrieben. Hierin ist unter anderem erläutert, wie beim Umschaltbetrieb in einem Anschlußgruppen-Paar die Steuereinrichtung der einen Anschlußgruppe die Steuerfunktionen für die an die Anschlußeinrichtungen beider Anschlußgruppen angeschlossenen Leitungen übernimmt. An das Teilkoppelfeld dieser einen Anschlußgruppe werden hierzu die Anschlußeinrichtungen der anderen Anschlußgruppe durch einen Umschaltevorgang zusätzlich mit angeschaltet. Darüber hinaus ist bereits vorgeschlagen worden (vgl. die europäische Patentanmeldung EP-A-0 291 791, veröffentlicht am 23.11.1988), auch Linkabschlußleitungen der letztgenannten Anschlußgruppe in entsprechender Weise zu dem Teilkoppelfeld der erstgenannten Anschlußgruppe hin umschaltbar zu machen, mit der Wirkung, daß im eingangs erwähnten Umschaltebetrieb auch die Linkverbindungswege zwischen zentralem Koppelfeld und derjenigen Anschlußgruppe weiterhin in Benutzung bleiben, während dezentrale Steuereinrichtung jeweils außer Betrieb gegangen ist.

Für die Erfindung besteht die Aufgabe, in einer Schaltungsanordnung der eingangs angegebenen Art günstige Voraussetzungen dafür zu schaffen, daß bei Betriebsstörungen in Anschlußgruppen, hervorgerufen z. B. durch Störung oder Ausfall der betreffenden Strom- und/oder Taktversorgungseinrichtungen, eine unmittelbar praktische Auswirkung hiervon soweit wie möglich eliminiert werden kann und für eine Behebung von deren Ursachen möglichst günstige Bedingungen gegeben sind.

Die Erfindung löst die ihr gestellte Aufgabe durch die im Kennzeichen des Patentanspruchs 1 angegebenen Merkmale.

Durch die Erfindung ist es leicht möglich, eine dezentrale Steuereinrichtung einer Anschlußgruppe aus dem Betrieb zu nehmen, sie auszubauen und auszutauschen, und zwar unter der Voraussetzung, daß dabei die Anschlußeinrichtungen dieser Anschlußgruppe sowie deren Linkanschlußschaltungen weiter in Betrieb bleiben. Bei Außerbetriebnahme einer dezentralen Steuereinrichtung ist dennoch die lückenlose weitere Taktversorgung für die ihr zugeordneten und im Umschaltebetrieb weiter betriebenen Anschlußeinrichtungen und Linkanschlußschaltungen gewährleistet. Dies wird erreicht durch die eigenen Taktversorgungseinrichtungen jeweils für die Anschlußeinrichtungen einer Anschlußgruppe, sowie für diejenige ihrer dezentralen Steuereinrichtung mit Teilkoppelfeld sowie für diejenige ihrer Linkanschlußschaltungen; erreicht wird dies in Verbindung mit dem plesiosynchronen Taktsystem, indem dieses auch hinsichtlich der genannten drei Bestandteile innerhalb jeweils einer Anschlußgruppe zum Tragen kommt, was wiederum die Voraussetzung dafür ist, daß diese Teile von eigenen Taktversorgungseinrichtungen versorgt werden. Durch die Erfindung kann auch ohne Schwierigkeiten eine Inbetriebnahme oder Wiederinbetriebnahme einer dezentralen Steuereinrichtung erfolgen (Beendigung des Umschaltebetriebs), indem aufgrund der voneinander unabhängigen Stromversorgungseinrichtungen bei Inbetriebnahme oder Wiederinbetriebnahme einer dezentralen Steuereinrichtung keine Spannungseinbrüche bei den anderen Teilen derselben Anschlußgruppe oder den verschiedenen Teilen der anderen Anschlußgruppe auftreten können.
In diesem Zusammenhang ist auch auf den durch die Erfindung erzielbaren Effekt der kleinen Ausfalleinheit hinzuweisen. Die Tatsache, daß nicht mehr die ganze Anschlußgruppe die kleinste Ausfalleinheit ist sondern bei einer Betriebsstörung in einer Anschlußgruppe die an sie angeschalteten Anschlußeinrichtungen sowie Linkverbindungen, und daß diese umschaltbar sind, führt dazu, daß kleinste Ausfalleinheiten nunmehr eine Anschlußeinrichtung, ein Teilnehmeranschluß oder die an eine Mehrfachteilnehmeranschlußschaltung angeschlossenen Teilnehmerstellen oder dergleichen sind.

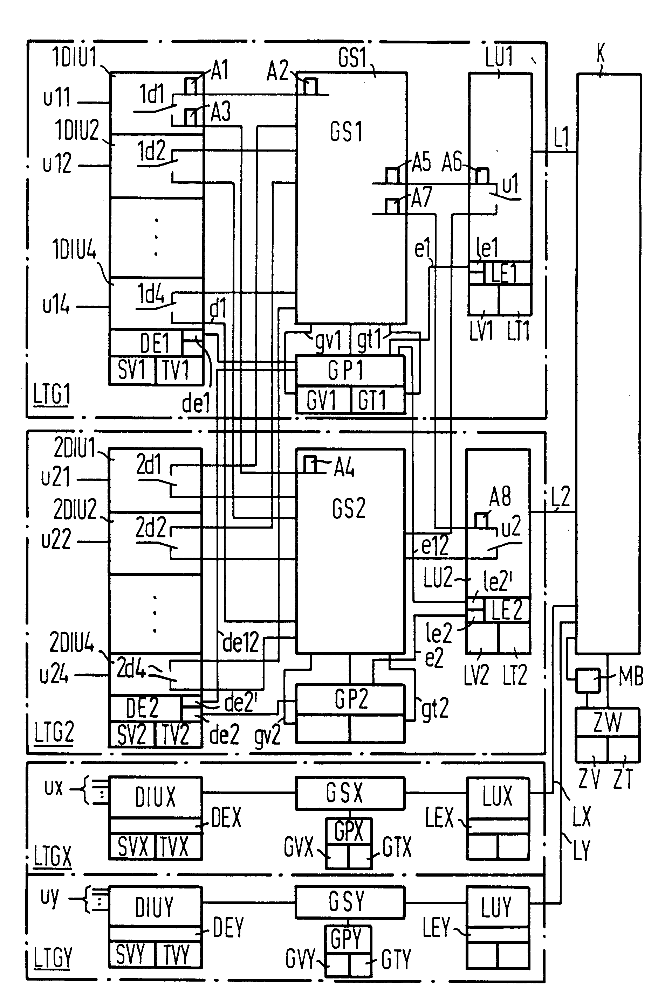

In der Zeichnung ist ein Ausführungsbeispiel der Erfindung nur in wesentlich zu ihrem Verständnis beitragenden Bestandteilen dargestellt, worauf dieselbe jedoch keineswegs beschränkt ist. Das erfindungsgemäße Ausführungsbeispiel baut auf auf einer Darstellung und Beschreibung einer PCM-Fernsprechvermittlungsanlage, wie sie in Form der europäischen Patentanmeldung EP-A-0 236 779 vorliegt. Die Beschreibung des erfindungsgemäßen Ausführungsbeispieles geht also davon aus, daß eine zentralgesteuerte PCM-Zeitmultiplex-Fernsprechvermittlungsanlage von der Art bekannt ist, wie sie in der zuvor erwähnten europäischen Patentanmeldung dargestellt und erläutert ist.

Auch im vorliegenden Falle des erfindungsgemäßen Ausführungsbeispieles ist eine PCM-Zeitmultiplex-Fernsprechvermittlungsanlage vorgesehen, in der ein der Verbindungsdurchschaltung dienendes zentrales Koppelfeld K samt einem dessen Steuerung dienenden zentralen Prozessor ZW vorgesehen ist. Koppelfeld und Prozessor können in an sich bekannter Weise aus Sicherheitsgründen dupliziert sein. Es ist ferner eine größere Anzahl von dezentralen Anschlußgruppen LTG1 bis LTGY vorgesehen. Jede Anschlußgruppe weist u.a. ein Teilkoppelfeld, z.B. GS1 bis GSY, auf. Das Teilkoppelfeld einer Anschlußgruppe dient zum außenseitigen Anschluß von Verbindungs- und/oder Teilnehmerleitungen u11 bis u14 und zum innenseitigen Anschluß von zu Koppelfeldanschlüssen des zentralen Koppelfeldes K führenden Linkverbindungswegen. Ferner weist jede Anschlußgruppe je eine dezentrale Steuereinrichtung auf, z.B. GP1, bis GPY. Die dezentrale Steuereinrichtung einer jeden Anschlußgruppe dient zur Schaltkennzeichenaufnahme von den genannten Leitungen. Diese Leitungen können als Analogleitungen ausgebildete Teilnehmerleitungen und Verbindungsleitungen so wie Kanäle von Trägerfrequenzleitungen und von Zeitmultiplex-Übertragungssystemen sein.

Die dezentrale Steuereinrichtung einer jeden Anschlußgruppe dient u.a. zur Schaltkennzeichenaufnahme von den genannten Leitungen, zur Schaltkennzeichenvorverarbeitung sowie zur Schaltkennzeichenweiterleitung an den zentralen Prozessor, ferner auch zur Schaltkennzeichenaussendung auf diese Leitungen in an sich bekannter Weise. Ebenso wie im bekannten Falle ist auch im vorliegenden Falle vorgesehen, daß die Anschlußgruppen je zu zweit einander paarweise zugeordnet sind. Dies betrifft z.B. die beiden Anschlußgruppen LTG1 und LTG2. Ebenso betrifft dies auch die beiden Anschlußgruppen LTGX und LTGY.

Innerhalb jeder Anschlußgruppe sind Anschlußeinheiten, z.B. 1 DIU1 bis 1 DIU4 vorgesehen; entsprechendes gilt für die weiteren Anschlußgruppen. Die Anschlußeinrichtungen dienen einem außenseitigen Anschluß der bereits erwähnten Teilnehmer-und/oder Verbindungsleitungen u1 bis uy bzw. von entsprechenden Kanalsystemen. Die Anschlußeinheiten innerhalb einer Anschlußgruppe sind innerhalb derselben primär mit ihrem Teilkoppelfeld verbunden, und zwar über die Ruheseiten der Umschaltekontakte 1d1 bis 2d4. So sind also die Anschlußeinheiten IDIU1 bis IDIU4 der Anschlußgruppe LTG1 über die Ruheseiten der Umschaltekontakte 1d1 bis 1d4 primär mit ihrem Teilkoppelfeld GS1 verbunden. - In ähnlicher Weise sind zum innenseitigen Anschluß der Linkverbindungswege L1 bzw. L2 an das Teilkoppelfeld individuell dienende Linkumschaltanordnungen, z.B. LU1 in LTG1, primär mit dem zugeordneten Teilkoppelfeld, z.B. GS1 innerhalb der betreffenden Anschlußgruppe verbunden. Diese Linkumschaltanordnungen gehören zu den bereits genannten Linkanschlußschaltungen, also Anschlußschaltungen, an die die Linkverbindungswege angeschlossen sind. Da diese Linkanschlußschaltungen i.w. aus den Linkumschaltanordnungen bestehen, ist weiterhin überwiegend nur noch hiervon die Rede, wobei aber unausgesprochen immer die Linkanschlußschaltungen mit gemeint sind. Die genannte Verbindung besteht über die Ruheseite z.B. des Umschaltekontaktes u1. Die Linkverbindungswege L1 und L2 sind also innenseitig über die Linkumschaltanordnungen LU1 und LU2 primär mit den zugeordneten Teilkoppelfeldern GS1 und GS2 verbunden. Dieses primäre Verbundensein besteht also über die Ruheseiten der Umschaltkontakte u1 und u2. Die Linkverbindungswege sind als Zeitmultiplexleitungen ausgebildet. Die Linkumschaltanordnungen LU1 und LU2 sind über nicht im einzelnen gezeigte Linkabschlußschaltungen mit den beiden Teilkoppelfeldern verbunden. Jedem Teilkoppelfeld ist also eine nicht gezeigte Linkabschlußschaltung zugeordnet.

Die genannten Anschlußeinheiten einerseits und die genannten, Linkumschaltanordnungen enthaltende Linkanschlußschaltungen andererseits, die primär innerhalb der betreffenden Anschlußgruppe mit ihrem Teilkoppelfeld über die diesem zugeordnete Linkabschlußschaltung verbunden sind, sind andererseits auch mit dem Teilkoppelfeld über die diesem zugeordnete Linkabschlußschaltung der jeweils anderen Anschlußgruppe über die diesem zugeordnete Linkabschlußschaltung verbindbar, also mit dem Teilkoppelfeld der jeweiligen Partner-Anschlußgruppe. Die Anschlußeinheiten 1DIU1 bis 1DIU4 der Anschlußgruppe LTG1 sind also über die Arbeitsseiten der Omschaltkontakte 1d1 bis 1d4 außenseitig mit dem Teilkoppelfeld GS2 der Partner-Anschlußgruppe LTG2 verbindbar. In entsprechender Weise ist auch die Linkumschaltanordnung LU1 des Linkverbindungsweges L1 der Anschlußgruppe LTG1 mit Hilfe des Umschalters u1 mit dem Teilkoppelfeld GS2 der Anschlußgruppe LTG2 innenseitig verbindbar. Entsprechendes gilt unter dem Gesichtspunkt der Vertauschung der beiden einander paarweise zugeordneten Anschlußgruppen LTG1 und LTG2.

Im Normalbetrieb befinden sich die Omschaltkontakte 1d1 bis 2d4 und u1 und u2 in ihrer dargestellten Ruhelage. Im Normalbetrieb arbeiten die beiden Anschlußgruppen separat voneinander. Diese Betriebsweise wird deshalb auch als "Separat-Betrieb" bezeichnet. Hiervon unterscheidet sich der sogenannte "Umschaltebetrieb". Werden z.B. die Umschaltekontakte 2d1 bis 2d4 sowie der Umschaltekontakt u2 aus ihrer dargestellten Ruhelage in ihre Arbeitslage gebracht, so werden die Anschlußeinheiten 2DIU1 bis 2DIU4 der Anschlußgruppe LTG2 außenseitig mit dem Teilkoppelfeld GS1 der Anschlußgruppe LTG1 verbunden. Ebenso wird der Kontakt u2 aus seiner dargestellten Ruhelage in seine Arbeitslage gebracht, wodurch der über die Linkumschaltanordnung LU2 verbundene Linkverbindungsweg L2 der Anschlußgruppe LTG2 innenseitig mit dem Teilkoppelfeld GS1 der Anschlußgruppe LTG1 verbunden wird und zwar über die in diesem Teilkoppelfeld vorgesehene, nicht dargestellte Linkabschlußschaltung. Das Teilkoppelfeld GS2 und die dezentrale Steuereinrichtung GP2 werden bei diesem Omschaltebetrieb außer Betrieb genommen. Die Verbindungen werden dabei über das Teilkoppelfeld der anderen Anschlußgruppe LTG1 hergestellt. Die Herstellung dieser Verbindungen im Umschaltebetrieb erfolgt dann durch die dezentrale Steuereinrichtung GP1 der jeweiligen Partner-Anschlußgruppe.

Wie in der Zeichnung angedeutet ist, sind innerhalb jeweils einer Anschlußgruppe, z.B. LTG1, erstens deren Anschlußeinheiten, z.B. 1DIU1 bis 1DIU4, zweitens deren dezentrale Steuereinrichtung, z.B. GP1, zusammen mit dem Teilkoppelfeld, z.B. GS1, und drittens deren mit je einer Linkumschaltanordnung, z.B. LU1, ausgestatteten Linkanschlußschaltung als einzelne Baueinheiten ausgeführt. Aufbaumäßig sind also diese drei Bestandteile innerhalb einer Anschlußgruppe als in sich selbständige Aufbaueinheiten konfiguriert. In diesem Zusammenhang sind innerhalb einer Anschlußgruppe, z.B. LTG1, erstens die Anschlußeinheiten, z.B. 1DIU1 bis 1DIU4, zweitens die die Linkumschaltanordnung, z.B. LU1, enthaltenen Linkanschlußschaltungen und drittens die dezentrale Steuereinrichtung, GP1, zusammen mit dem Teilkoppelfeld, z.B. GS1, dieser Anschlußgruppe mit voneinander unabhängigen Stromversorgungseinrichtungen, z.B. SV1, GV1 und LV1 ausgestattet. Diese Stromversorgungseinrichtungen mögen zwar von einer gemeinsamen Quelle her gespeist werden; jedoch sind diese Stromversorgungseinrichtungen SV1, GV1 und LV1 dahingehend voneinander unabhängig, daß eine gegenseitige Beeinflussung der von ihnen gespeisten Einrichtungen, z.B. infolge von Kurzschluß und möglicherweise dadurch sowie auch anders bedingtem Ausfall verursachten starken Belastungs-Sprüngen u.dgl., ausgeschlossen ist. Werden z.B. die Anschlußeinrichtungen einer Anschlußgruppe nach einer Außerbetriebsetzung wieder in Betrieb genommen, so kann eine solche Wiederinbetriebnahme nicht zu einem Spannungseinbruch beim entsprechenden Teilkoppelfeld, bei der entsprechenden dezentralen Steuereinrichtung oder bei der entsprechenden Linkanschlußschaltung einschließlich deren Linkumschaltanordnung führen; entsprechendes gilt umgekehrt. Es kann auch nicht eine Inbetriebnahme oder Wiederinbetriebnahme in einer Anschlußgruppe einen Spannungseinbruch bei der Stromversorgung der anderen Anschlußgruppe, also der Partner-Anschlußgruppe zur Folge haben. Die genannten Stromversorgungseinrichtungen dienen in an sich bekannter Weise zur Bereitstellung eines oder mehrerer Spannungspotentiale zwecks Stromversorgung in den Anschlußeinrichtungen, dezentralen Steuereinrichtungen und Linkumschaltanordnungen.

In gleicher Weise wie die Anschlußeinrichtungen einer Anschlußgruppe, ferner deren dezentrale Steuereinrichtung einschließlich dem Teilkoppelfeld sowie die die Linkumschaltanordnung enthaltende Linkanschlußschaltung derselben Anschlußgruppe mit je einer eigenen Stromversorgungseinrichtung ausgestattet sind, die auch einzeln für diese drei Bereiche Taktversorgungseinrichtungen vorgesehen. Innerhalb der Anschlußgruppe LTG1 ist den Anschlußeinheiten 1DIU1 bis 1DIU4 die Taktversorgungseinrichtung TV1 zugeordnet. Der dezentralen Steuereinrichtung GP1 ist zusammen mit dem Teilkoppelfeld GS1 die Taktversorgungseinrichtung GT1 zugeordnet. Der betreffenden Linkanschlußschaltung (zu der die Linkumschaltanordnung LU1 gehört), ist die Taktversorgungseinrichtung LT1 individuell zugeordnet. Entsprechendes gilt für die anderen Anschlußgruppen LTG2 bis LTGY.

Die Linkanschlußschaltungen enthalten i.w. jeweils die genannte Linkumschaltanordnung, die betreffende Stromversorgungseinrichtung und die Taktversorgungseinrichtung. Im folgenden ist überwiegend nur noch von derjeweils betreffenden Linkumschaltanordnung die Rede.

Innerhalb einer Anschlußgruppe, z.B. LTG1, erhält die deren Linkanschlußschaltung LU1 entsprechende Taktversorgungseinrichtung LT1 ihren Mastertakt vom zentralen Prozessor ZW, und zwar von einer zentralen Taktversorgungseinrichtung ZT. Dies geschieht über einen über das Koppelfeld K zur Anschlußgruppe LTG1 in an sich bekannter Weise (vgl. DE-A 3106903) durchgeschalteten Steuerkanal. Taktversorgungseinrichtungen, die mit Hilfe jeweils eines Mastertaktes gesteuert werden, sind an sich bekannt. Hierzu ist auf die deutschen Offenlegungsschriften DE-A-3111022, DE-A-32 27 848 und DE-A-32 27 849 hinzuweisen.

Innerhalb einer Anschlußgruppe, z.B. LTG1, erhält die ihrer dezentralen Steuereinrichtung GP1 und dem Teilkoppelfeld GS1 zugeordnete Taktversorgungseinrichtung GT1 ihren Mastertakt von der der Linkumschaltanordnung LU1 ensprechenden Taktversorgungseinrichtung LT1. Ebenso erhält die den Anschlußeinrichtungen 1DIU1 bis 1DIU4 zugeordnete Taktversorgungseinrichtung TV1 ihren Mastertakt von der der dezentralen Steuereinrichtung GP1 zugeordneten Taktversorgungseinrichtung GT1.

Für die jeweilige Weitergabe des Mastertaktes können eigene Übermittlungswege vorgesehen werden. Ebenso gut ist es aber auch möglich, den Mastertakt in an sich bekannter Weise mit Hilfe durchgeschalteter individueller Verbindungen zu übertragen und den Mastertakt aus diesen Verbindungen in ebenfalls bekannter Weise abzuleiten.

Es wurde bereits ausführlich der Umschaltebetrieb beschrieben. Befindet sich z.B. die Anschlußgruppe LTG2 im Umschaltebetrieb, so sind die Kontakte 2d1 bis 2d4 und der Kontakt u2 aus ihrer dargestellten Ruhelage in ihre Arbeitslage gebracht. Die Verbindungen, die über die Anschlußeinheiten 2DIU1 bis 2DIU4 und über die die Linkumschaltanordnung LU2 enthaltende Linkanschlußschaltung hergestellt werden, werden nicht über das Teilkoppelfeld GS2 durchgeschaltet, sondern über das Teilkoppelfeld GS1 der Partner-Anschlußgruppe LTG1. In diesem Falle erhält die Taktversorgungseinrichtung LT2 dieser Linkanschlußschaltung ihren Mastertakt in der oben bereits angegebenen Weise. Die Taktversorgungseinrichtung TV2 der Anschlußeinrichtungen 2DI1 bis 2DIU4 erhält jedoch im Fall des zuvor angesprochenen Umschaltebetriebs ihren Master-takt von der Taktversorgungseinrichtung GT1 der dezentralen Steuereinrichtung GP1 der Partner-Anschlußgruppe LTG1. Und diese erhält ihren Master-Takt von der Taktversorgungseinrichtung LT2 der Linkumschaltanordnung LU2. Die Übermittlung des Mastertakts erfolgt in der gleichen Weise, wie zuvor angegeben.

Innerhalb einer Anschlußgruppe sind also - wie weiter oben angegeben wurde - drei selbständige Einheiten konfiguriert, und zwar erstens die Anschlußeinheiten, zweitens die dezentrale Steuereinrichtung mit dem Teilkoppelfeld und drittens die Linkanschlußschaltung. Das Taktsystem, in dem diese Einheiten zusammenarbeiten, ist ein plesiosynchrones Taktsystem. Hierfür gibt es Schnittstellenbedingungen, deren Realisierung zu einem plesiosynchronen Taktsystem führt. Hierfür sind in an sich bekannter Weise die genannten Taktversorgungseinrichtungen per Mastertakt in der beschriebenen Weise in Abhängigkeit voneinander geschaltet, sowie in den Nachrichtenwegen in an sich bekannter Weise Anpassungseinrichtungen (Ausgleichsspeicher) vorgesehen, die pro Kanal einer Einsynchronisierung bezüglich Flanke und Phase der übertragenen Impulse dienen. Bei diesen Impulsen handelt es sich um diejenigen, die im Zusammenhang mit der PCM-Zeitmultplextechnik kontinuierlich übertragen werden. Solche Anpassungsschaltungen (auch als "Ausgleichsspeicher" bezeichnet") sind vielfältig bekannt. Sie sind immer da vorzusehen, wo Impulsfolgen aufzunehmen sind. Der Takt der aufzunehmenden Impulsfolge ist mit demjenigen in Einklang zu bringen, der innerhalb der betreffenden Baueinheit jeweils maßgebend ist. In diesem Zusammenhang sei auf die Europäische Patentschrift EP-A-0057758 hingewiesen.

Es gibt Internverbindungen, die innerhalb einer Anschlußgruppe die eigenen Anschlußeinrichtungen mit dem eigenen Teilkoppelfeld verbinden, und zwar über die Ruheseiten der Umschaltekontakte 1d1 bis 2d4. Es gibt weitere Internverbindungen, die beim Umschaltebetrieb das Teilkoppelfeld der eigenen Anschlußgruppe mit den Anschlußeinrichtungen der jeweiligen Partner-Anschlußgruppe verbinden, und zwar über die Arbeitsseiten der genannten Umschaltekontakte. Die ein plesiosynchrones Taktsystem schaffenden Schnittstellenbedingungen sind nun realisiert für diese Internverbindungen, und zwar für die Internverbindungen jeweils innerhalb einer Anschlußgruppe sowie für die Internverbindungen, die vom Teilkoppelfeld jeweils einer Anschlußgruppe zu den Anschlußeinrichtungen der jeweiligen Partner-Anschlußgruppe verlaufen. Die Realisierung dieser Schnittstellenbedingungen, die ein plesiosynchrones Taktsystem schaffen, erfolgt durch den Einsatz der Anpassungsschaltungen an allen diesen Internleitungen.

Von besonderer Bedeutung ist im erfindungsgemäßen Zuammenhang die Tatsache, daß nicht nur diejenigen Internleitungen, die von dem Teilkoppelfeld einer Anschlußgruppe zu den Anschlußeinrichtungen der jeweiligen Partner-Anschlußgruppe verlaufen, mit solchen Anpassungseinrichtungen ausgestattet sind, mit deren Hilfe die das plesiosynchrone Taktsystem schaffenden Schnittstellenbedingungen realisiert sind, sondern auch für diejenigen Internverbindungen, die innerhalb einer Anschlußgruppe das betreffende Teilkoppelfeld mit den betreffenden zugehörigen Anschlußeinrichtungen verbinden. Dadurch, daß auch für diese Internverbindungen die genannten Anpassungseinrichtungen zur Einsynchronisierung bezüglich Flanke und Phase der Impulse vorgesehen sind, können in der oben erwähnten Weise die verschiedenen Baueinheiten pro Anschlußgruppe konfiguriert werden, und zwar jeweils mit eigenen Stromversorgungseinrichtungen und eigenen Taktversorgungseinrichtungen.

Es sind auch noch Innenverbindungen vorgesehen, die innerhalb einer Anschlußgruppe die eigenen Linkanschlußschaltungen mit dem eigenen Teilkoppelfeld verbinden, also über die Ruheseiten der Umschalter u1 und u2. Auch hinsichtlich dieser Innenverbindungen sind in entsprechender Weise gleiche, ein plesiosynchrones Taktsystem schaffende Schnittstellenbedingungen mit Hilfe von Anpassungseinrichtungen (A5, A0 - A7, A8) realisiert, die für diejenigen weiteren Innenverbindungen, die beim Umschaltebetrieb das Teilkoppelfeld jeweils der eigenen Anschlußgruppe mit der Linkanschlußschaltung der jeweiligen Partner-Anschlußgruppe verbinden. Es sind also hinsichtlich des plesiosynchronen Taktsystems auch für die Zusammenarbeit zwischen den Teilkoppelfeldern einerseits und den Linkanschlußschaltungen andererseits ebenfalls Anpassungseinrichtungen (A5-A8) vorgesehen für die betreffenden Innenverbindungen. Mit Hilfe dieser Anpassungseinrichtungen erfolgt eine Einsynchronisierung bezüglich Flanke und Phase auch in der Zusammenarbeit zwischen Teilkoppelfeldern einerseits und Linkanschlußschalordnungen andererseits.

Durch die beim beschriebenen Ausführungsbeispiel angegebenen Maßnahmen wird es für den Betreiber einer entsprechenden Fernsprechvermittlungsanlage möglich gemacht, eine dezentrale Steuereinrichtung einer Anschlußgruppe aus dem Betrieb zu nehmen, sie auszubauen und auszutauschen, und zwar unter der Voraussetzung, daß dabei die Anschlußeinrichtungen dieser Anschlußgruppe sowie deren Linkanschlußschaltungen weiter in Betrieb bleiben. Bei Außerbetriebnahme einer dezentralen Steuereinrichtung ist dennoch die lückenlose weitere Taktversorgung für die ihr zugeordneten und im Umschaltebetrieb weiter betriebenen Anschlußeinrichtungen und Linkanschlußschaltungen gewährleistet. Dies wird erreicht durch die eigenen Taktversorgungseinrichtungen jeweils für die Anschlußeinrichtungen einer Anschlußgruppe, sowie für diejenige ihrer dezentralen Steuereinrichtung mit Teilkoppelfeld sowie für diejenige ihrer Linkanschlußschaltungen; erreicht wird dies in Verbindung mit dem plesiosynchronen Taktsystem, indem dieses auch hinsichtlich der genannten drei Bestandteile innerhalb jeweils einer Anschlußgruppe zum Tragen kommt, was wiederum die Voraussetzung dafür ist, daß diese Teile von eigenen Taktversorgungseinrichtungen versorgt werden. Es kann auch ohne Schwierigkeiten eine Inbetriebnahme oder Wiederinbetriebnahme einer dezentralen Steuereinrichtung erfolgen (Beendigung des Umschaltebetriebs), indem aufgrund der voneinander unabhängigen Stromversorgungseinrichtungen bei Inbetriebnahme oder Wiederinbetriebnahme einer dezentralen Steuereinrichtung keine Spannungseinbrüche bei den anderen Teilen derselben Anschlußgruppe oder den verschiedenen Teilen der anderen Anschlußgruppe auftreten können.

Für die erwähnte Außerbetriebnahme und die Wiederinbetriebnahme einer dezentralen Steuereinrichtung einschließlich ihres zugehörigen Teilkoppelfeldes ist vorgesehen, die genannten Internverbindungen einerseits und die Innenverbindungen andererseits über Kabel zu führen, die an dem jeweiligen Teilkoppelfeld und/oder an den Anschlußeinrichtungen sowie an den Linkanschlußschaltungen steckbar sind. Dies betrifft die Internverbindungen und die Innenverbindungen sowohl jeweils innerhalb einer Anschlußgruppe als auch diejenigen Internverbindungen und Innenverbindungen, die innerhalb jeweils eines Anschlußgruppen-Paares die gegenseitigen Verbindungen von Anschlußgruppe zu Anschlußgruppe bereitstellen.

Den Anschlußeinrichtungen, z.B. 2DIU1 bis 2DIU4, einer Anschlußgruppe, wie z.B. LTG2, sowie ihrer Linkabschlußschaltung, z.B. LU2, sind Einstelleinrichtungen, z.B. DE2 bzw. LE2, zugeordnet. Diese dienen zum Empfang von Steuerinformationen von der betreffenden dezentralen Steuereinrichtung, z.B. GP2, über Steuerleitungen, z.B. d2 bzw. e2 und zur Abgabe von Einstellbefehlen an die Anschlußeinrichtungen bzw. die betreffende Linkumschaltanordnung. Den genannten Steuerleitungen sind empfangsseitig Torschaltungen, z.B. u.a. de2 bzw. le2, individuell zugeordnet.

Es ist auch noch auf Hilfs-Steuerleitungen, z.B. de12 bzw. e12, hinzuweisen, die innerhalb eines Anschlußgruppenpaares, z.B. LTG1/LTG2, von der dezentralen Steuereinrichtung, z.B. GP1, der einen Anschlußgruppe, z.B. LTG1, zu der Einstelleinrichtung, z.B. DE2 bzw. LE2, der Anschlußeinrichtungen, z.B. 2DIU1 bis 2DIU4, und der Einstelleinrichtung, z.B. LE2, der Linkumschaltanordnung, z.B. LU2, der jeweils anderen Anschlußgruppe, z.B. LTG2, und umgekehrt verlaufen. Diese Hilfs-Steuerleitungen dienen im Umschaltebetrieb dazu, von einer dezentralen Steuereinrichtung einer Anschlußgruppe die Anschlußeinrichtungen sowie die Linkumschaltanordnung der jeweiligen Partner-Anschlußgruppe mitzusteuern, d.h. zusätzlich zu den Anschlußeinrichtungen sowie der Linkumschaltanordnung jeweils der eigenen Anschlußgruppe, die über die entsprechenden Steuerleitungen in an sich bekannter Weise gesteuert werden.

Die Steuerleitungen und Hilfs-Steuerleitungen, die hier nur auszugsweise dargestellt sind, sind Punkt-zu-Punkt-Verbindungen und führen zu Torschaltungen de1 bis le2 und zu weiteren, nicht gezeigten Torschaltungen, die den Steuerleitungen individuell zugeordnet sind, und die bei den Einstelleinrichtungen, z.B. DE2 bzw. LE2, in einer Anschlußgruppe, z.B. LTG2, von der jeweils eigenen dezentralen Steuereinrichtung, z.B. G2, steuerbar sind, z.B. über die Steuerleitungen d2 und e2.

Es werden bekanntlich nicht nur Nachrichtenverbindungen durchgeschaltet, sondern in Zuordnung zu diesen auch Signalisierungsverbindungen. Zu einer Mehrzahl von Nachrichtenkanälen ist gemeinsam ein Signalisierungskanal vorgesehen, der innerhalb der Pulsrahmen zeitlich aufgeteilt ist in der Weise, daß besimmte Zeitabschnitte innerhalb der Pulsrahmen bestimmten Nachrichtenkanälen fest zugeordnet sind. Was nun zuvor im Hinblick auf die Nachrichtenkanäle und Nachrichtenverbindungen ausgeführt wurde über die Anpassungseinrichtungen zur Einsynchronisierung bezüglich Flanke und Phase, gilt ebenso auch für die Signalisierungsverbindungen.

Es ist also vorgesehen, die Hilfssteuerleitungen, z.B. de12 bzw. e12, ebenso wie die genannten Steuerleitungen, z.B. de1 und de2 bzw. e1 und e2, als Punkt-zu-Punkt-Verbindungen auszubilden, also unverzweigt und im Unterschied zum an sich bekannten und häufig benutzten Bus-Prinzip. In Verbindung mit dieser Realisierung als Punkt-zu-Punkt-Verbindungen ist vorgesehen, innerhalb der Anschlußeinrichtungen und der Linkumschaltanordnungen an den Endpunkten dieser Punkt-zu-Punkt-Verbindungen, insbesondere an jedem einzelnen Endpunkt, einzeln die steuerbaren, an sich bekannten Torschaltungen, z.B. de1, de2, de2′ bzw. le1, le2, le2′, vorzusehen, die jeweils von der dezentralen Steuereinrichtung, z.B. GP1, der eigenen Anschlußgruppe, z.B. LTG1, und/oder von der jeweiligen Partner-Anschlußgruppe durchlässig bzw. undurchlässig steuerbar sind.

Zur Realisierung der ein plesiosynchrones Taktsystem schaffenden Schnittstellenbedingungen sind die Internverbindungen und die Innenverbindungen in den Anschlußeinrichtungen am Teilkoppelfeld (A5, A7) und in der Linkumschaltanordnung (A6,A7) mit Ausgleichsspeichern ausgestattet, die zur Zwischenspeicherung - jeweils empfangsseitig - der betreffenden übertragenen Informationen zwecks Angleichung der Taktsysteme hinsichtlich Phase und Pulsflanke dienen, die innerhalb der Anschlußeinrichtungen, der Teilkoppelfelder und der Linkumschaltanordnungen bestehen. Hierzu sind die in der Zeichnung dargestellten Ausgleichsspeicher A1 bis A8 sowie weitere, nicht dargestellte Ausgleichsspeicher vorgesehen, die an den Enden der Innenverbindungen und der Internverbindungen einzeln fur diese und jeweils für mehrere Kanäle oder kanalindividuell empfangsseitig angeordnet sind.

Im Hinblick auf den erläuterten Umschaltebetrieb weisen die Anschlußeinrichtungen außer Schnittstellen zum eigenen Teilkopelfeld auch solche zum Teilkoppelfeld der jeweiligen Partner-Anschlußgruppe auf. Dies trifft zu für die Nachrichtenwege, die Steuer- und Signalisierungs wege (bei kanalgebundener Signalisierung) sowie für die betreffenden Taktsysteme.

Zum Ausgleich der Phasenunterschiede der Taktsysteme zwischen zwei einander zugeordneten Anschlußgruppen werden an den Sprechwegen zwischen Anschlußgruppen und Teilkoppelfeldern in an sich bekannter Weise die bereits erwähnten Ausgleichsspeicher vorgesehen. Unter ungestörten Betriebsbedingungen kann der Phasenversatz von einigen hundert Nanosekunden durch einen zeitlichen Versatz zwischen Ein- und Auslesen der Sprechweginformation am Ausgleichsspeicher aufgefangen werden. Dies erfordert die Zwischenspeicherung eines Kanals im Ausgleichsspeicher. Die Informationslaufzeit wird dadurch nur unwesentlich erhöht.

Um Frequenzunterschiede zwischen den Taktsystemen der beiden jeweils einander paarweise zugeordneten Anschlußgruppen nach einer Umschaltung des jeweiligen Referenztaktes aufgrund der unterschiedlichen Regelzeiten auszugleichen, sind die Ausgleichsspeicher in an sich bekannter Weise als vollspeicher für einen gesamten Informationsrahmen gebildet. Frequenzabweichungen führen dann nur noch zu gelegentlichen, von der Frequenzdifferenz abhängigem Rahmenschlupf.

Im Normalbetrieb erfolgt die Steuerung der Ausgleichsspeicher taktmäßig uber die jeweilige Schnittstelle zur eigenen Anschlußgruppe bzw. zur Partner-Anschlußgruppe. Die Durchschaltung des Sprechweges erfolgt über je ein Teilkoppelfeld und die Anschlußeinheiten jeweils der gleichen Anschlußgruppe. Im Umschaltebetrieb aufgrund Routineumschaltung erfolgt die Taktsteuerung über das Teilkoppelfeld der jeweiligen Partner-Anschlußgruppe. Auch die Durchschaltung der Sprechwege für die Anschlußeinrichtungen erfolgt über die Teilkoppelfelder der jeweiligen Partner-Anschlußgruppe. Im Umschaltebetrieb aufgrund eines Fehlers in einer Anschlußgruppe verlaufen die Sprechverbindungen von deren Anschlußeinrichtungen über das Teilkoppelfeld der jeweiligen Partner-Anschlußgruppe. Dabei erfolgt die interne Taktsteuerung der Anschlußeinrichtungen der störungsbehafteten Anschlußeinrichtung über ein Control-Interface zwischen ihr und der Partner-Anschlußgruppe in Anlehnung an deren Taktsystem.

Die Anschlußeinrichtungen werden von den Teilsteuerwerken angesteuert in einem 4-ms-Überrahmen. Damit beim Routineumschalten kein Fehler auftritt, werden diese Anschlußeinrichtungen mit dem Takt und Synchronisierungspuls vom jeweils ansteuernden Teilkoppelfeld versorgt und es wird in einem Signalisierungs-Speicher eine Nachricht von max. 32 Byte zwischengespeichert. Das interne Auslesen erfolgt dann durch den Prozessortakt.

Zwischen den beiden jeweils einander paarweise zugeordneten Anschlußgruppen besteht ein Steuerkanal zum gegenseitigen Austausch von Steuerinformationen. Dieser Steuerkanal überträgt ebenfalls im 4-ms-Überrahmen. Zur Vermeidung von Störungen beim Umschalten werden die betreffenden Schnittstellen ebenso wie das Signalisierungsinterface mit dem zugeordneten Takt und Synchronpuls versorgt. Um einen Nachrichtenverlust beim Auseinanderlaufen der Taktsysteme zu vermeiden, ist auf der jeweiligen Empfangsseite ein Ausgleichsspeicher vorgesehen. Dieser wird in der jeweiligen Anschlußgruppe mit dem internen Takt ausgelesen.

Für eine störungsfreie Umschaltung im Hinblick auf die zu übertragenden Nachrichten sind also zum Ausgleich von Phasendifferenzen und Frequenzabweichungen die nachfolgend angegebenen Maßnahmen getroffen. Es sind an die Anschlußeinrichtungen Ausgleichsspeicher zum Abfangen von Phasendifferenzen zwischen den Taktsystemen zweier einander paarweise zugeordneten Anschlußgruppen durch versetztes Ein- und Auslesen der Nachrichten vorgesehen.

Zum Ausgleich von Frequenzabweichungen sind die Ausgleichsspeicher, als Rahmenspeicher ausgelegt. Ebenso sind Ausgleichsspeicher, z.B. A5, A6, in den nicht im einzelnen gezeigten Linkabschlußschaltungen vorgesehen. Für eine störungsfreie Umschaltung ist dafür gesorgt, daß die Nachrichten, die von den Anschlußgruppen in Richtung auf das Koppelfeld K übertragen werden, takt-, rahmen- und phasensynchron angeboten werden. Für diese Taktanpassung sind die Ausgleichsspeicher in den Linkabschlußschaltungen vorgesehen. Die erforderliche Informationssynchronität wird durch das Auslesen der Information aus den betreffendne Ausgleichsspeichern mit dem gleichen, regenerierten Takt vom Koppelnetz erreicht.

Für eine störungsfreie Informationsumschaltung in jeder der Linkumschaltanordnungen ist eine taktgesteuerte Informationsumschaltung vorgesehen. Zum Abfangen von Frequenzabweichungen sind die Ausgleichsspeicher als Rahmenspeicher ausgelegt.

## Patentansprüche

1. Schaltungsanordnung für zentralgesteuerte Fernmeldevermittlungsanlagen, insbesondere PCM-Zeitmultiplex-Fernsprechvermittlungsanlagen, in denen ein der Verbindungsdurchschaltung dienendes zentrales Koppelfeld (K) samt einem dessen Steuerung dienenden zentralen Prozessor (ZW) vorgesehen ist, und in denen eine Mehrzahl von dezentralen Anschlußgruppen (LTG1, LTG2; LTGX, LTGY) mit je einem Teilkoppelfeld (GS1, GS2; GSX, GSY) zum außenseitigen Anschluß von Verbindungs- und/oder Teilnehmerleitungen (u11...u24; ux, uy) und zum innenseitigen Anschluß von zu Koppelfeldanschlüssen des zentralen Koppelfeldes führenden Linkverbindungswegen (L1, L2; LX, LY) und mit je einer dezentralen Steuereinrichtung (GP1, GP2; GPX, GPY) zur Schaltkennzeichenaufnahme von den genannten Leitungen, zur Schaltkennzeichenvorverarbeitung sowie zur Schaltkennzeichenweiterleitung an den zentralen Prozessor (ZW) und zur Schaltkennzeichenaussendung auf diese Leitungen ausgestattet ist, und in denen die Anschlußgruppen (LTG1, LTG2; LTGX, LTGY) je zu zweit einander paarweise zugeordnet sind, und in denen innerhalb jeder derselben einerseits zum außenseitigen Anschluß der Teilnehmer- und/oder Verbindungs-Leitungen (u11..u24; ux, uy) dienende und innerhalb der jeweiligen Anschlußgruppe primär mit ihrem Teilkopelfeld (GS1, GS2; GSX, GSY) verbundene Anschlußeinheiten (1DUI1...2DIU4; DIUX, DIUY), z.B. Teilnehmeranschlußschaltungen, Mehrfachteilnehmeranschlußschaltungen, Verbindungsleitungs(-mehrfach-)abschlußschaltungen u.dgl., einerseits sowie zum innenseitigen Anschluß der Linkverbindungswege (L1, L2; LX, LY) individuell dienende und ebenfalls primär innerhalb der betreffenden Anschlußgruppe mit ihrem Teilkoppelfeld verbundene Linkanschlußschaltungen (LU1, LU2; LUX, LIY) andererseits zusätzlich einerseits außenseitig und andererseits innenseitig mit dem Teilkoppelfeld (GS1, GS2; GSX, GSY) der jeweils anderen, also einer jeweils zweiten (Partner-)Anschlußgruppe verbindbar sind - und umgekehrt - , so daß dann bei einem sich vom Separat-Betrieb der betreffenden beiden Anschlußgruppen (LTG1, LTG2; LTGX, LTGY) unterscheidenden Umschaltebetrieb für Verbindungen, die jeweils über eine Anschlußeinheit (z. B. 1DIU1) sowie eine Linkanschlußschaltung (z. B. LU1) der ersten - bzw. zweiten - Anschlußgruppe (z. B. LTG1 bzw. LTG2) und über das Teilkoppelfeld (z. B. GS2 bzw. GS1) der anderen Anschlußgruppe verlaufen, die entsprechende Schaltkennzeichenbearbeitung sowie Teilkoppelfeld-Einstellung ebenfalls von deren dezentraler Steuereinrichtung (z. B. GP2) durchgeführt wird,
**dadurch gekennzeichnet,**
daß innerhalb jeweils einer Anschlußgruppe (LTG1, LTG2; LTGX, LTGY) erstens deren Anschlußeinheiten (1DIU1...2DIU4; DIUX, DIUY), zweitens deren dezentrale Steuereinrichtung (GP1, GP2; GPX, GPY) zusammen mit dem Teilkoppelfeld (GS1, GS2; GSX, GSY) und drittens deren Linkanschlußschaltungen (LU1, LU2; LUX, LUY) als aufbau- und steuerungsmäßig einzelne Baueinheiten ausgeführt und mit voneinander unabhängigen Stromversorgungseinrichtungen (z. B. SV1, GV1, LV1) und einzeln mit Taktversorgungseinrichtungen (z. B. TV1, GT1, LT1) ausgestattet sind, von denen die den Linkanschlußschaltungen zugeordnete (z. B. LT1) ihren Mastertakt vom zentralen Prozessor (ZW),
die der dezentralen Steuereinrichtung (z. B. GP1) und dem Teilkoppelfeld (z. B. GS1) zugeordnete (z. B. GT1) ihren Mastertakt von der der Linkanschlußschaltung derselben Anschlußgruppe zugeordneten (LT1)
und die den Anschlußeinrichtungen zugeordnete (TV1) ihren Mastertakt von der der dezentralen Steuereinrichtung (z. B. GP1) zugeordneten Taktversorgungseinrichtung (z. B. GT1) erhält,
daß hinsichtlich solcher Internverbindungen, die innerhalb einer Anschlußgruppe (z. B. LTG1) die eigenen Anschlußeinrichtungen (z. B. 1DIU1...1DIU4) mit dem eigenen Teilkoppelfeld (z. B. GS1) verbinden, gleiche, ein plesiosynchrones Taktsystem schaffende Schnittstellenbedingungen realisiert sind wie für solche weiteren Internverbindungen,
die beim Umschaltebetrieb das Teilkoppelfeld (z. B. GS1) der eigenen Anschlußgruppe (z. B. LTG1) mit den Anschlußeinrichtungen (z. B. 2DIU1...2DIU4) der jeweiligen Partner-Anschlußgruppe (z. B. LTG2) verbinden,
und daß hinsichtlich solcher Innenverbindungen, die innerhalb einer Anschlußgruppe (z. B. LTG1) die eigenen Linkabschlußschaltungen (z. B. LU1) mit dem eigenen Teilkoppelfeld (z. B. GS1) verbinden,
ebenfalls gleiche, ein plesiosynchrones Taktsystem schaffende Schnittstellenbedingungen realisiert sind wie für solche weiteren Innenverbindungen, die beim Umschaltebetrieb das Teilkoppelfeld (z. B. GS1) der eigenen Anschlußgruppe (z. B. LTG1) mit den Linkanschlußschaltungen (z. B. LU2) der jeweiligen Partner-Anschlußgruppe (z. B. LTG2) verbinden, wozu zur Realisierung der genannten, ein plesiosynchrones Taktsystem schaffenden Schnittstellenbedingungen den Schaltungsteilen, die die Internverbindungen und die Innenverbindungen realisieren, in den Anschlußeinrichtungen, am Teilkoppelfeld und in der Linkanschlußschaltung Ausgleichsspeicher (A0...A8) zugeordnet sind, die zur Zwischenspeicherung jeweils empfangsseitig der betreffenden übertragenen Informationen zwecks Angleichung der Taktsysteme dienen, die innerhalb der Anschlußeinrichtungen (z. B. DIU1), der Teilkoppelfelder (z. B. GS1) und der Linkanschlußschaltungen (z. B. LU1) bestehen.

2. Schaltungsanordnung nach Anspruch 1,
**dadurch gekennzeichnet,** daß beim Umschaltebetrieb in einem Anschlußgruppen-Paar die Taktversorgungseinrichtung, die den Anschlußeinrichtungen der Anschlußgruppe mit jeweils außer Betrieb befindlicher dezentraler Steuereinrichtung zugeordnet ist, ihren Mastertakt von der dezentralen Steuereinrichtung der jeweiligen Partner-Anschlußgruppe erhält.

3. Schaltungsanordnung nach Anspruch 1,
**dadurch gekennzeichnet,**
daß innerhalb eines Anschlußgruppen-Paares (z. B. LTG1, LTG2) von den dezentralen Steuereinrichtungen (z. B. GP1, GP2) zu den Anschlußeinrichtungen (z. B. 1DIU1; 2DIU1) und den Linkanschlußschaltungen (z. B. LU1, LU2) jeweils nicht nur der eigenen Anschlußgruppe (z. B. LTG1), sondern auch zu denen der jeweiligen Partner-Anschlußgruppe (z. B. LTG2) Steuerleitungen verlaufen, und daß diese als Punkt-zu-Punkt-Verbindungen ausgebildet sind.

4. Schaltungsanordnung nach Anspruch 3,
**dadurch gekennzeichnet,**
daß die Steuerleitungen empfangsseitig in den Anschlußeinrichtungen (z. B. 1DIU1) und in den Linkanschlußschaltungen (z. B. LU1) mit Torschaltungen (z. B. de1, le1) ausgestattet sind, die jeweils von der dezentralen Steuereinrichtung (z. B. GP1) der eigenen Anschlußgruppe (z. B. LTG1) her steuerbar sind.

## Claims

1. Circuit arrangement for centrally controlled telecommunication exchanges, preferably PCM time-division multiplex telephone exchanges, in which a central switching network (K) serving to switch through connections is provided together with a central processor (ZW) serving to control the latter, and in which a plurality of decentralized line/trunk groups (LTG1, LTG2; LTGX, LTGY) are equipped in each case with a subswitching network (GS1, GS2; GSX, GSY) for the external connection of interexchange trunk and/or subscriber lines (u11...u24; ux, uy) and for the internal connection of link connection paths (L1, L2; LX, LY) leading to switching network terminals of the central switching network, and in each case with a decentralized control device (GP1, GP2; GPX, GPY) for receiving switching signals from said lines, for preprocessing switching signals and also for forwarding switching signals to the central processor (ZW) and for transmitting switching signals on said lines, and in which the line/trunk groups (LTG1, LTG2; LTGX, LTGY) are assigned to one another in pairs of two in each case, and in which within each of the latter on the one hand line/trunk units (1DIU1...2DIU4; DIUX, DIUY), for example subscriber line circuits, multiple subscriber line circuits, interexchange trunk (multiple) termination circuits and the like, which serve on the one hand for the external connection of the subscriber lines and/or interexchange trunk lines (u11...u24; ux, uy) and are connected within the respective line/trunk group primarily to its subswitching network (GS1, GS2; GSX, GSY), and also on the other hand link interface circuits (LU1, LU2; LUX, LIY), which individually serve for the internal connection of the link connection paths (L1, L2; LX, LY) and are likewise connected within the respective line/trunk group primarily to its subswitching network, can be connected additionally on the one hand externally, and on the other hand internally, to the subswitching network (GS1, GS2; GSX, GSY) of the respective other, that is to say a respective second, (partner) line/trunk group - and vice versa - so that, given a switchover operation that differs from the separate operation of the respective two line/trunk groups (LTG1, LTG2; LTGX, LTGY) for connections which run in each case via a line/trunk unit (e.g. 1DIU1) and also a link interface circuit (e.g. LU1) of the first - or second respectively - line/trunk group (e.g. LTG1 or LTG2 respectively) and via the subswitching network (e.g. GS2 or GS1 respectively) of the other line/trunk group, the corresponding switching signal processing and also subswitching network setting are then likewise executed by the decentralized control device (e.g. GP2) thereof, characterized in that within one line/trunk group (LTG1, LTG2; LTGX, LTGY) in each case firstly its line/trunk units (1DIU1...2DIU4; DIUX, DIUY), secondly its decentralized control device (GP1, GP2; GPX, GPY) together with the subswitching network (GS1, GS2; GSX, GSY), and thirdly its link interface circuits (LU1, LU2; LUX, LUY) are designed as discrete modules with respect to their structure and control and are equipped with mutually independent power supply devices (e.g. SV1, GV1, LV1) and individually with clock supply devices (e.g. TV1, GT1, LT1), of which those (e.g. LT1) assigned to the link interface circuits receive their master clock from the central processor (ZW), those (e.g. GT1) assigned to the decentralized control device (e.g. GP1) and to the subswitching network (e.g. GS1) receive their master clock from the one (LT1) assigned to the link interface circuit of the same line/trunk group, and those (TV1) assigned to the line/trunk devices receive their master clock from the clock supply device (e.g. GT1) assigned to the decentralized control device (e.g. GP1), in that, with respect to such internal connections which connect their own line/trunk devices (e.g. 1DIU1...1DIU4) to their own subswitching network (e.g. GS1) within a line/trunk group (e.g. LTG1), interface conditions creating a plesiochronous clock system are realized which are identical to those of such further internal connections that connect the subswitching network (e.g. GS1) of their own line/trunk group (e.g. LTG1) to the line/trunk devices (e.g. 2DIU1...2DIU4) of the respective partner line/trunk group (e.g. LTG2) in the case of switchover operation, and in that with respect to such internal connections which connect their own link termination circuits (e.g. LU1) to their own subswitching network (e.g. GS1) within a line/trunk group (e.g. LTG1), likewise interface conditions creating a plesiochronous clock system are realized which are identical to those of such further internal connections that connect the subswitching network (e.g. GS1) of their own line/trunk group (e.g. LTG1) to the link interface circuits (e.g. LU2) of the respective partner line/trunk group (e.g. LTG2) in the case of switchover operation, for which purpose, for the realization of the aforesaid interface conditions creating a plesiochronous clock system, compensation buffers (A0...A8) are assigned to the circuit parts realizing the internal connections and the inner connections in the line/trunk devices, at the subswitching network and in the link interface circuit, which compensation buffers serve in each case for the temporary storage at the receiving end of the respective information transmitted for the purpose of aligning the clock systems present within the line/trunk devices (e.g. DIU1), the subswitching networks (e.g. GS1) and the link interface circuits (e.g. LU1).

2. Circuit arrangement according to Claim 1, characterized in that in switchover operation in a line/trunk group pair, the clock supply device which is assigned to the line/trunk devices of the line/trunk group with a decentralized control device that is not operating in each case, receives its master clock from the decentralized control device of the respective partner line/trunk group.

3. Circuit arrangement according to Claim 1, characterized in that within a line/trunk group pair (e.g. LTG1, LTG2), control lines run from the decentralized control devices (e.g. GP1, GP2) to the line/trunk devices (e.g. 1DIU1; 2DIU1) and the link interface circuits (e.g. LU1, LU2) in each case not only of their own line/trunk group (e.g. LTG1) but also to those of the respective partner line/trunk group (e.g. LTG2), and in that said control lines are designed as point-to-point connections.

4. Circuit arrangement according to Claim 3, characterized in that the control lines are equipped at the receiving end in the line/trunk devices (e.g. 1DIU1) and in the link interface circuits (e.g. LU1) with gate circuits (e.g. de1, le1), which can be controlled in each case from the decentralized control device (e.g. GP1) of their own line/trunk group (e.g. LTG1).

## Revendications

1. Montage pour des installations de commutation de télécommunication à commande centrale, notamment des installations de commutation téléphonique MIC à multiplexage temporel,
dans lesquelles il est prévu un champ de couplage central (K), qui sert à l'interconnexion des liaisons, ainsi qu'un processeur central (ZW) servant à la commande de ce champ de couplage,
dans lesquelles une multiplicité de groupes décentralisés de raccordement, (LTG1,LTG2;LTGX,LTGY) sont munis d'un champ de couplage partiel respectif (GS1,GS2;GSX,GSY) pour le raccordement, côté extérieur, de lignes de jonction et/ou de lignes d'abonnés (u11...u24; ux,uy), et pour le raccordement, côté intérieur, de voies de liaison de raccordement (L1,L2; LX,LY) aboutissant à des bornes du champ de couplage central, et d'un dispositif décentralisé respectif de commande (GP1,GP2;GPX,GPY) pour recevoir des signaux caractéristiques de commutation desdites lignes, pour le traitement préalable des signaux caractéristiques de commutation ainsi que pour la transmission des signaux caractéristiques de commutation au processeur central (ZW) et pour l'émission de signaux caractéristiques de commutation dans ces lignes,
dans lesquelles les groupes de raccordement (LTG1,LTG2;LTGX,LTGY) sont associés respectivement entre eux par couples,
dans lesquelles à l'intérieur de chacun de ces groupes, d'une part, des unités de raccordement (1DIU1,...2DIU4; DIUX,DIUY), par exemple des circuits de raccordement d'abonnés, des circuits de raccordement d'abonnés multiples, des circuits de terminaison (multiples) de lignes de jonction et analogues, qui servent pour le raccordement, côté extérieur, des lignes d'abonnés et/ou des lignes de jonction (u11...u24; ux, uy) et reliés, côté primaire, à l'intérieur du groupe de raccordement respectif, au champ de couplage partiel (GS1,GS2;GSX,GSY) de ce groupe, ainsi que d'autre part des circuits de raccordement de liaison (LU1,LU2; LUX, LIY), qui servent individuellement au raccordement, côté intérieur, des voies de liaison de raccordement (L1,L2;LX,LY), et qui sont reliés également, côté primaire, à l'intérieur du groupe de raccordement concerné, au champ de couplage partiel de ce groupe, peuvent être reliés en supplément d'une part, côté extérieur et d'autre part côté intérieur, au champ de couplage partiel (GS1,GS2;GSX,GSY) de l'autre groupe de raccordement, c'est-à-dire d'un second groupe respectif de raccordement (partenaire) - et inversement - de sorte que, dans le cas d'un fonctionnement de commutation qui diffère du fonctionnement séparé des deux groupes de raccordement concernés (LTG1,LTG2;LTGX,LTGY), pour des liaisons, qui passent respectivement par une unité de raccordement (par exemple 1DIU1) ainsi que par l'intermédiaire d'un circuit de raccordement de liaison (par exemple LU1) du premier ou du second groupe de raccordement (par exemple LTG1 ou LTG2) et par l'intermédiaire du champ de couplage partiel (par exemple GS2 ou GS1) de l'autre groupe de raccordement, le traitement correspondant des signaux caractéristiques de commutation ainsi que le réglage du champ de couplage partiel sont également exécutés par le dispositif décentralisé de commande (par exemple GP2) de ces groupes,
caractérisé par le fait
qu'à l'intérieur d'un groupe de raccordement (LTG1,LTG2; LTGX, LTGY), en premier lieu ses unités de raccordement (1DIU1...2DIU4; DIUX, DIUY), et en second lieu leur dispositif décentralisé de commande (GP1,GP2; GPX, GPY) sont réalisés conjointement avec le champ de couplage partiel (GS1,GS2; GSX, GSY), et en troisième lieu ses circuits de raccordement de liaison (LU1,LU2; LUX, LUY) sont réalisés sous la forme de modules individuels du point de vue construction et commande, et sont munis de dispositifs d'alimentation en courant (par exemple SV1,GV1,LV1), qui sont indépendants, et qui sont munis individuellement de dispositifs d'alimentation en cadence (par exemple TV1,GT1,LT1), parmi lesquels
le dispositif (par exemple LT1) associé aux circuits de raccordement de liaison, reçoit sa cadence pilote de la part du processeur central (ZW),
le dispositif (par exemple GT1), qui est associé au dispositif décentralisé de commande (par exemple GP1) et au champ de couplage partiel (par exemple GS1), reçoit sa cadence pilote de la part du dispositif (LT1) associé au circuit de raccordement de liaison du même groupe de raccordement, et
le dispositif (TV1), associé aux dispositifs de raccordement, reçoit sa cadence pilote de la part du dispositif d'alimentation de cadence (par exemple GT1) associé au dispositif de commande décentralisée (par exemple GP1),
qu'en ce qui concerne des liaisons internes, qui relient, à l'intérieur d'un groupe de raccordement (par exemple LTG1), les dispositifs particuliers de raccordement (par exemple 1DIU1...1DIU4) au champ de couplage partiel particulier (par exemple GS1), des conditions d'interface, qui créent un système de cadence plésiosynchrone, sont créées en étant identiques à celles prévues pour d'autres liaisons internes, qui, lors du fonctionnement de commutation, relient le champ de couplage partiel (par exemple GS1) du groupe de raccordement particulier (par exemple LTG1) aux dispositifs de raccordement (par exemple 2DIU1...2DIU4) du groupe de raccordement partenaire respectif (par exemple LTG2), et
qu'en ce qui concerne les liaisons internes, qui relient, à l'intérieur d'un groupe de raccordement (par exemple LTG1), les circuits de raccordement de liaison particuliers (par exemple LU1) au champ de couplage partiel particulier (par exemple (GS1),
des conditions d'interface, qui créent un système plésiosynchrone, sont également créées en étant identiques à celles prévues pour d'autres liaisons internes, qui, lors du fonctionnement de commutation, relient le champ de couplage partiel (par exemple GS1) du groupe de raccordement proprement-dit (par exemple LTG1) aux circuits de raccordement de liaison (par exemple LU2) du groupe de raccordement partenaire respectif (par exemple LTG2), auquel cas, pour réaliser lesdites conditions d'interface créant un système de cadence plésiosynchrone, aux éléments de circuits, qui réalisent les jonctions internes est les liaisons intérieures, sont associés, au niveau du champ de couplage partiel et dans le circuit de raccordement de liaison, des mémoires de compensation (A0...A8), qui servent à mémoriser temporairement, respectivement côté réception, les informations transmises concernées, de manière à équilibrer les systèmes de cadence, qui existent à l'intérieur du dispositif de raccordement (par exemple DIU1), des champs de couplage partiels (par exemple GS1) et des circuits de raccordement de liaison (par exemple LU1).

2. Montage suivant la revendication 1, caractérisé par le fait que, dans le cas du fonctionnement de commutation, dans un couple de groupes de raccordement, le dispositif d'alimentation en cadence, qui est associé aux dispositifs de raccordement du groupe de raccordement pourvu du dispositif de commande décentralisé qui est respectivement arrêté, reçoit sa cadence pilote de la part du dispositif de commande décentralisé du groupe de raccordement partenaire respectif.

3. Montage suivant la revendication 1, caractérisé par le fait qu'à l'intérieur d'un couple de groupes de raccordement (par exemple LTG1,LTG2), des lignes de commande s'étendent depuis les dispositifs décentralisés de commande (par exemple GP1,GP2) en direction des dispositifs de raccordement (par exemple 1DIU1; 2DIU1) et des circuits de raccordement de liaison (par exemple LU1,LU2), non seulement du groupe de raccordement proprement-dit (par exemple LTG1), mais également en direction du groupe de raccordement partenaire respectif (par exemple LTG2), et que ces lignes de commande sont réalisées sous la forme de liaisons point-à-point.

4. Montage suivant la revendication 3, caractérisé par le fait que les lignes de commande sont munies, côté entrée, dans les dispositifs de raccordement (par exemple 1DIU1) et dans les circuits de raccordement de liaison (par exemple LU1), de circuits de portes (par exemple de1, le1), qui peuvent être commandés respectivement par le dispositif décentralisé de commande (par exemple GP1) du groupe de raccordement particulier (par exemple LTG1).
